Europäisches Patentamt

European Patent Office

Office européen des brevets

(11) Numéro de publication: **0 154 802**
**B1**

(12) # FASCICULE DE BREVET EUROPÉEN

(45) Date de publication du fascicule du brevet:
**25.11.87**

(51) Int. Cl.⁴: **B 21 D 31/06,** B 23 P 9/04,
**B 25 D 17/02**

(21) Numéro de dépôt: **85101157.7**

(22) Date de dépôt: **05.02.85**

(54) **Appareil à Percussion.**

(30) Priorité: **07.02.84 FR 8401843**

(43) Date de publication de la demande:
**18.09.85 Bulletin 85/38**

(45) Mention de la délivrance du brevet:
**25.11.87 Bulletin 87/48**

(84) Etats contractants désignés:
**AT BE CH DE FR GB IT LI LU NL SE**

(56) Documents cité:
**DE-A-3 130 748**
**DE-C-514 066**
**FR-A-2 124 883**
**FR-A-2 198 812**
**FR-A-2 444 719**
**US-A-1 784 866**

(73) Titulaire: **ALSTHOM, 38, avenue Kléber, F-75784 Paris Cédex 16 (FR)**

(72) Inventeur: **Coulon, André, 1, rue des Bleuets, F-90160 Bessoncourt (FR)**

(74) Mandataire: **Weinmiller, Jürgen, Lennéstrasse 9 Postfach 24, D-8133 Feldafing (DE)**

## Description

La présente invention a trait à un appareil a percussion comprenant une arrivée d'air comprimé servant à imprimer un mouvement de percussion à un outil, ledit outil coulissant à l'intérieur d'une enveloppe et étant terminé par une partie sphérique dépassant du sommet de l'enveloppe.

Un tel appareil est connu du document FR-A 2 444 719.

Dans l'appareil connu l'outil de percussion est monobloc et lorsque l'extrémité sphérique est usée il faut remplacer tout l'outil ce qui est onéreux puisqu'un tel outil doit être fabriqué spécialement. De plus lors de l'emploi de cet appareil le recul est important ce qui rend son maniement malaisé.

L'appareil selon l'invention est caractérisé en ce que ledit outil est ramené par un ressort disposé contre le sommet de l'enveloppe en ce que la partie sphérique est une bille et en ce que ledit outil comporte un tube creux dont l'extrémité dépassant du sommet de l'enveloppe est rabattue et vient emprisonner la bille qui depasse d'une distance D de cette extrémité, ladite bille étant repoussée contre cette extrémité par un ressort logé dans le tube.

Ainsi la seule partie soumise à usure est une bille d'acier que l'on trouve facilement dans le commerce.

De plus le recul de l'appareil est moindre puisque la bille s'enfonce dans le tube à chaque percussion.

Selon un perfectionnement de l'invention, l'extrémité du tube opposée à la bille comporte un bouchon réglable en position et comprimant plus ou moins le ressort contre la bille.

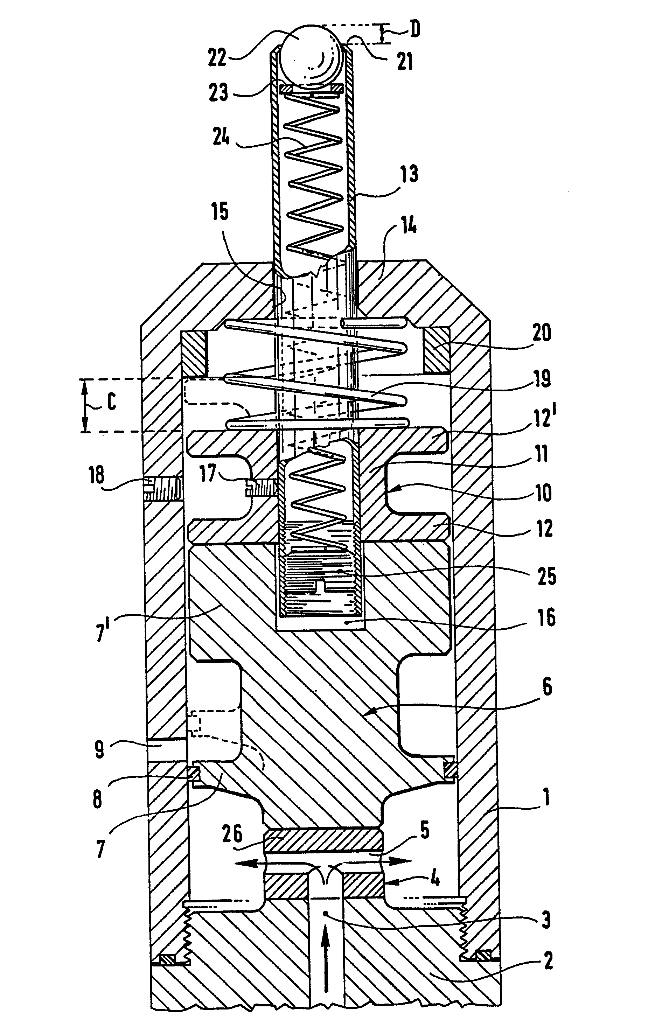

L'invention va maintenant être décrite plus en détail en se référant à un mode de réalisation particulier cité à titre d'exemple non limitatif et représenté en coupe sur la figure unique.

L'appareil selon l'invention comprend une enveloppe cylindrique 1 comportant à son sommet 14 un orifice circulaire 15. Cette enveloppe 1 est fixée à la tête d'un pistolet 2 qui fournit l'air comprimé par une canalisation 3.

Sur l'arrivée de gaz comprimé 3 du pistolet on ajoute un gicleur 4 à air comprimé comportant latéralement deux fentes en croix 5 et dans sa partie supérieure une face 26 servant de butée à un piston 6.

Ce piston 6 comporte deux épanouissements 7, 7' coulissant dans l'enveloppe 1. L'epanouissement 7 proche du gicleur 4 est muni d'un segment d'étanchéité 8.

Des trous 9 sont prévus dans l'enveloppe 1 et servent à l'éjection de l'air lorsque le piston 6 est en fin de course (écarté du gicleur 4). Sur le piston 6 repose l'outil 10 qui est constitué d'une pièce 11 cylindrique comportant deux épanouissements 12, 12' coulissant à l'intérieur de l'enveloppe, et d'un tube creux 13 disposé dans un logement axial de la pièce 11. Ce tube 13 passe par l'orifice circulaire 15 de l'enveloppe 1, et dépasse du sommet 14 de l'enveloppe 1.

Ce tube 13 dépasse également légèrement en dessous de la pièce 11 et vient se loger dans un logement axial 16 prévu dans le piston 6.

Le tube 13 est solidarisé avec la pièce 11 par une vis 17 qui peut être vissée à partir de l'extérieur à travers une ouverture 18 de l'enveloppe 1 ultérieurement bouchée.

La pièce 11 est repoussée du sommet 14 par un ressort 19 disposé contre ce sommet 14. Un butoir 20 en forme de bague est disposé contre ce sommet 14 et permet de limiter la course de la pièce 11.

L'extrémité 21 du tube 13 est rabattue et vient emprisonner une bille 22 qui dépasse d'une distance D de cette extrémité 21.

Cette bille 22 repose sur une rondelle 23 qui est repoussée par un ressort 24 prenant appui au bas du tube 13 sur un bouchon 25 que l'on visse à l'intérieur du tube 13.

En vissant plus ou moins le bouchon 25 on régle l'effort du ressort 24 sur la bille 22.

La distance entre la pièce 11 et le butoir 20 représente la course C maximale de l'outil 10.

La distance D représente l'enfoncement maximal de la bille 22 dans le tube 13.

En général pour traiter une surface on dispose le pistolet 7 perpendiculairement à la surface avec la bille 22 en bas au contact avec cette surface. On a donc choisi le ressort 19 et réglé le ressort 24 pour éviter que la bille 22 s'enfonce jusqu'à la distance D dans le tube 13, car l'extrémité 21 du tube 13 pourrait être endommagée.

Le pistolet est repoussé vers l'arrière d'une distance C-D (en négligeant l'enfoncement de la bille dans le métal) et non pas d'une distance C comme avec le pistolet connu ce qui facilite considérablement son emploi.

Lorsque la bille 22 est usée, on dévisse la vis 16 pour libérer le tube 13 et le sortir complètement de l'enveloppe 1.

Il suffit alors de dévisser le bouchon 25 pour remettre une nouvelle bille 22 dans le tube 11.

Le tube 13 est alors remis à poste. La bille est en acier très dur et son diamètre est supérieur à 2 mm de préférence compris entre 6 et 8 mm pour permettre un bon traitement de surface.

## Revendications

1. Appareil à percussion comprenant une arrivée d'air comprimé (3) servant à imprimer un mouvement de percussion à un outil (10), ledit outil coulissant à l'intérieur d'une enveloppe (1) et étant terminé par une partie sphérique (22), dépassant du sommet (14) de l'enveloppe (1) caractérisé en ce que ledit outil (10) est ramené par un ressort (19) disposé contre le sommet (14) de l'enveloppe (1), en ce que la partie sphérique est une bille (22) et en ce que ledit outil (10) comporte un tube creux (13) dont l'extrémité (21) dépassant du sommet (14) de l'enveloppe (1) est rabattue et vient emprisonner la bille (22) qui dépasse d'une distance (D) de cette extrémité (21), ladite bille (22) étant repoussée contre cette extrémité (21) par un ressort (24) logé dans le tube (13).

2. Appareil à percussion selon la revendication 1, caractérisé en ce que l'extrémité du tube (13) opposée à la bille (22) comporte un bouchon (25) réglable en position et comprimant plus ou moins le ressort (24) contre la bille (22).

## Patentansprüche

1. Schlaggerät mit einer Zuführung für komprimierte Luft (3), die einem Werkzeug (10) eine Schlagbewegung verleiht, wobei das Werkzeug im Inneren einer Hülle (1) gleitet und in einem kugelförmigen Teil (22) endet, das über die Stirnwand (14) der Hülle (1) vorsteht, dadurch gekennzeichnet, daß das Werkzeug (10) durch eine Feder (19) zurückgeholt wird, die gegen die Stirnwand (14) der Hülle (1) drückend angeordnet ist, daß das kugelförmige Teil eine Kugel (22) ist und daß das Werkzeug (10) ein hohles Rohr (13) aufweist, dessen über die Oberseite (14) der Hülle (1) hervorragendes Ende (21) umgeschlagen ist und die Kugel (22) einschließt, die um einen Abstand (D) aus diesem Ende (21) hervorragt, wobei die Kugel (22) durch eine im Rohr (13) angebracht Feder (24) gegen dieses Ende (21) gedrückt wird.

2. Schlaggerät nach Anspruch 1, dadurch gekennzeichnet, daß das der Kugel (22) entgegengesetzt liegende Ende des Rohrs (13) einen einstellbaren Stopfen (25) aufweist, der die Feder (24) mehr oder weniger gegen die Kugel (22) komprimiert.

## Claims

1. A percussion apparatus comprising a compressed air inlet (3) for imparting a percussion mouvement to a tool (10), said ttool sliding inside an envelope (1) and being terminated by a spherical portion (22) protruding out of the top (14) of the envelope (1), characterized in that said tool (10) is drawn back by a spring (19) disposed against the top (14) of the envelope (1), that the spherical portion is a ball (22) and that said tool (10) comprises a hollow tube (13), the end (21) of which protruding out of the top (14) of the envelope (1) is folded back and emprisons the ball (22) which protrudes for a distance (D) outside this end (21), said ball (22) being pushed against this end (21) by a spring (24) located in the tube (13).

2. A percussion apparatus according to claim 1, characterized in that the end of the tube (13) opposed to the ball (22) comprises a position-adjustable stopper (25) compressing the spring (24) against the ball (22) to a greater or lesser extent.